Europäisches Patentamt
European Patent Office
Office européen des brevets

(11) Publication number: **0 158 501 A2**

(12) # EUROPEAN PATENT APPLICATION

(21) Application number: 85302312.5

(22) Date of filing: 02.04.85

(51) Int. Cl.[4]: C 08 G 63/38
C 08 L 67/02, C 08 K 5/53

(30) Priority: 02.04.84 JP 65321/84

(43) Date of publication of application: 16.10.85 Bulletin 85/42

(84) Designated Contracting States: BE DE FR GB IT NL

(71) Applicant: POLYPLASTICS CO. LTD.
30 Azuchimachi 2-chome
Higashi-ku Osaka-shi(JP)

(72) Inventor: Takahashi, Katsuhiko
324, Miyashita
Fuji-shi Shizuoka(JP)

(72) Inventor: Suzuki, Kunio
500, Kamiyobe Yobe-ku
Himeji-shi Hyogo(JP)

(74) Representative: Livsey, Gilbert Charlesworth Norris et al,
HYDE, HEIDE & O'DONNELL 146 Buckingham Palace Road
London SW1W 9TR(GB)

(54) **Method of preparation of polyester.**

(57) A polyester is improved in stability in the polymerization step by addition of a phosphonite of the general formula below at an arbitrary timing from the stage of addition of material monomer till forming after completion of polymerization reaction so that 0.002 to 1.0 wt. % may be contained in the obtained polyster, in production of polyester possessing residual group of dicarboxylic acid and residual group of dihydroxy compound as principal constituent units.

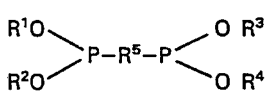

(I)

where each of $R^1$, $R^2$, $R^3$ and $R^4$ is an alkyl group, a substituted alkyl group, an aryl group or a substituted aryl group with the number of carbons ranging either equally or differently from 1 to 25, and $R^5$ denotes an alkylene group, or a substituted alkylene group, an arylene group or a substituted arylene group with the number of carbons ranging from 4 to 33.

EP 0 158 501 A2

# METHOD OF PREPARATION OF POLYESTER

This invention relates to an improved method of preparation of polyester, being enhanced in the decomposition stability in the polycondensation reaction by using a novel phosphorus compound, in production of polyester, especially thermoplastic polyester of which principal chain is wholly or partly linear.

A polyester, for example, polytetramethylene terephthalate which is a linear thermoplastic polyester may be decomposed in molecules or coloured due to the effects of heat, oxygen (air), light or the like during its manufacture, during processing after manufacture, or during use. In particular, in the fusion and polycondensation reaction process, a desired degree of polymerization may not be achieved due to pyrolysis. Still worse, due to such pyrolysis, a low molecular weight matter may be formed and collected in the polymerization apparatus, which may seriously affect the subsequent operation of the apparatus. To avoid such trouble, conventionally, antioxidant of phenol compound, amine compound, phosphoric acid, ester phosphate, phosphrous acid, ester phosphite and the like have been used as the stabilizers in preparation of polyester. These materials were not sufficient in the efficacy, and amine compounds, in particular, had a disadvantage of extremely colouring the stabilized polyester due to the effect of heat and

light. In this background, the present inventors have been intensively studying to obtain a polyester which is hardly decomposed and is never coloured due to the effects of heat, oxygen (air), light or the like during and after the manufacture of polyester. As a result, it has been found that the above-discussed problems may be solved by adding a phosphonite compound shown in the general formula (I)

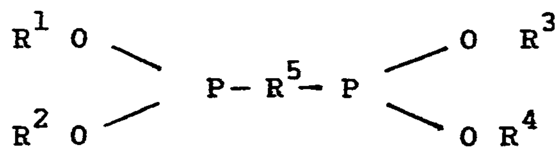

(I)

where each of $R^1$, $R^2$, $R^3$ and $R^4$ is an alkyl group, a substitutioned alkyl group and aryl group or a substitutioned aryl group with the number of carbons ranging either equally or differently from 1 to 25, and $R^5$ denotes an alkyl group a substituted alkyl group, an aryl group or a substituted aryl group with the number of carbons ranging from 4 to 33, in the process of preparation of polyester composed of a residual group of dicarboxylic acid and a residual group of hydroxy compound as principal constituent units of the polyester, which has led to this invention.

The polyester prepared in this method may be either homopolyester or copolyester. Examples of material monomer of the residual group of dicarboxylic acid as the constituent unit of the polyester may include terephthalic acid, isophthalic acid, naphthalein-2, 6-dicarboxylic acid, diphenyl dicarboxylic acid, diphenylether dicarboxylic acid, adipic acid, sebacic acid, and other known residual group of dicarboxylic acid, and its lower fatty acid esters. On the other hand, examples of material monomer of residual group of hydroxy compound as other constituent unit to compose ester include ethylene glycol, propylene glycol, butane diol, neopentyle glycol, methylpropane diol, cyclohexane dimethanol, xylilene diol,

hydroquinone, bisphenol A and other hydroxy compounds. Furthermore, the polyester of this invention may contain a moity of a residual group of a compound intended to modify the polyester. Examples of residual group of such compound include p-hydroxy benzoic acid, 3,5-dicarboxybenzene sodium sulfonate, di(hydroxyethyl) ether of tetrabrom bisphenol A, polyethylene glycol, polypropylene glycol, polybutylene glycol, oligoamide, oligocarbonate, and residual group of such compounds, trimellitic acid, pyromellitic acid, trimethylol propane, glycerin, pentaerythritol, and residual group of other multifunctional compounds.

The polyester manufactured in this invention is a thermoplastic polyester of which principle chain is wholly or partly linear. In the process of ester exchange reaction or esterification reaction, a polyester precursor is synthesized, and in the subsequent process of polycondensation reaction, a polymer is produced by a conventional method. As the catalyst, any known material may be used, of which examples include calcium, magnesium, zinc, cadmium or other II-a, b group metal, titanium, germanium, tin, lead, antimony, manganese or other IV-a, b group or V-b group metal's inorganic acid salt, organic acid salt, hydroxide, oxide, and alkoxide.

In the formula of a novel phosphonite compound expressed in the general formula (I) which is used in this invention, each of $R^1$, $R^2$, $R^3$ and $R^4$ is, as mentioned above, an alkyl group, a substituted alkyl group, an aryl group or a substituted aryl group with the number of carbons ranging from 1 to 25, whether being identical of different. Their examples may include methyl, ethyl, butyl, octyl, decyl, lauryl, tridecyl, stearyl, phenyl, alkyl and/or alkoxy substituted phenyls. $R^5$ denotes an alkyl(ene) group, a substituted alkyl(ene) group, an aryl(ene) group or a substituted aryl(ene) group with the number of carbons

ranging from 4 to 33, of which examples may include butylene, octylene, phenylene, naphthylene, diphenylene, and

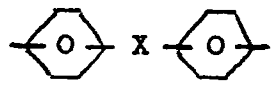 (II)

where X is any one of oxy group, sulfonyl group, carbonyl group, methylene group, ethylidene group, butylidene group, isopropyl group, and diazo group, etc. A particularly preferable phosphonite compound is tetrakis(2,4-di-t-butylphenyl)4,4-diphenylene phosphonite.

One or more types of these phosphonite compounds may be used in mixture. Such phosphonite compounds may be added at any desired timing during or after blending of the monomer material, but the initial reaction may be retarded when the addition is made added before or in the early stage of ester exchange reaction or direct esterification reaction. Therefore, it is preferable to add in the next step, that is, during the process of polycondensation reaction. For instance, when manufacturing polytetramethylene terephthalate as polyester, a polyester precursor is synthesized in the process of ester exchange reaction of dimethyl terephthalic acid and butane-1,4-diol or esterification reaction of terephthalic acid and butane-1,4-diol, and then by adding said phosphonite compound(s) before the process of polycondenation process or before the viscosity begins to elevate in the midst of the process, a polymer is manufactured. In particular, when the phosphonite compound is added in the earlier stage of the polycondensation reaction, it is more effective to inhibit decomposition during polycondensation reaction and obtain a higher degree of polymerization. Not to mention, the phosphonite compound of this invention is effective in maintaining the stability of formed article if added during extrusion pelletization or forming after completion of polymerization of polyester.

Such phosphonite compound is preferably added so as to be contained by 0.002 wt.% to 1.0 wt. % of the obtained polyester. If added more than 1.0 wt. %, the rate of polymerization becomes slow, and a desired effect may not be obtained. A preferable addition is 0.01 wt. % to 0.5 wt. %, or more preferably 0.03 wt. % to 0.3 wt. %.

In polycondensation by adding the phosphonite compound of this invention, it is also possible to add known additives as required depending on the purposes, such as titanium oxide, carbon black or other pigment, and stabilizer, plasticizer, filler, nucleating agent, lubricant, flame retardant, and glass fiber and other reinforcing agents.

According to this invention, since the effect to inhibit pyrolysis in manufacture of polyester is great, a higher degree of polymerization not experienced in the conventional fusion polymerization method may be easily achieved, and the time to obtain a desired degree of polymerization is shorter than in the conventional process. At the same time, thermal deterioration, oxidation deterioration and colouring are scarce during processing after manufacture or during use.

This invention is further described below by referring to its embodiments and reference examples, and it is a matter of course that this invention is not limited to the mentioned embodiments alone.

The measuring methods and conditions employed in the embodiments and reference examples are as follows.

° Measurement of intrinsic viscosity (I.V.)

Using o-chlorophenol as solvent, I.V. was measured by conventional procedure at 25°C.

° Calculation of discolouration degree E

The test piece was put 24 hours in a thermostatic oven (185°C) in the air, and L, a, b were measured by means of a colour difference meter before and after the treatment, and delta E was calculated in the following

equation, which shows the tendency of discolouration is stronger when the value of delta E is greater.

$$\text{delta } E = \sqrt{(L-Lo)^2 + (a - ao)^2 + (b - bo)^2}$$

where Lo, ao, bo : colours before treatment

L, a, b : colours after treatment

Embodiment 1

Dimethyl terephthalate by 5820 g, butane-1,4-diol by 3240 g, and tetra-n-butyl titanate by 4.66 g as catalyst were put in a reaction vessel, and an ester exchange reaction was conducted at 195°C, and this temperature was held for 20 minutes at a reduced pressure of 150 Torr to synthesize a polyester precursor. Then tetrakis(2,4-di-t-butylphenyl)4,4'-diphenylene phosphonite by 3.49 g was added together with butane-1,4-diol, and the temperature was raised to 250°C while the prrssure was gradually reduced. When decompressed to less than 1 Torr and heated up to 250°C, a polycondensation reaction was conducted for 3 hours and 30 minutes. The I.V. of thus obtained polymer was 1.10.

To evaluate the heat resistance, furthermore, polymer pellets were treated in the air in a thermostatic oven controlled at 185°C for 24 hours, and the drop delta I.V. of intrinsic viscosity after the treatment was 0.16. In the same conditions, the discolouration degree delta E, was 8.7.

Reference example 1

A polyester was prepared in the same procedure as in embodiment 1, except that tetrakis(2,4-di-t-butylphenyl)4,4'-diphenylene phosphonite was replaced by the same quantity of tridecyl phosphite. The I.V. of the obtained polymer was 0.89. The drop delta I.V. of intrinsic viscosity after treatment of polymer pellets in the same procedure as in embodiment 1 was 0.21, and the discolouration degree delta E, was 14.5.

Embodiment 2

Dimethyl terephthalate by 5820 g, butane-1,4-diol by 3380 g, and tetra-n-butyl titanate by 3.49 g as catalyst were put in a reaction vessel, and an ester exchange reaction was conducted at 195°C, and this temperature was held for 20 minutes at a reduced pressure of 150 Torr to synthesize a polyester precursor. Then tetrakis(2,4-di-t-butylphenyl)4,4'-diphenylene phosphonite by 3.49 g was added together with butane-1,4'-diol, and the temperature was raised to 250°C while reducing the pressure gradually. When decompressed to less than 1 Torr and heated up to 250°C, a polycondensation reaction was conducted for 1 hour and 50 minutes. The I.V. of thus obtained polymer was 0.75.

To evaluate the heat resistance, furthermore, polymer pellets were treated in the air in a thermostatic oven controlled at 185°C for 24 hours, and the drop delta I.V. of intrinsic viscosity after the treatment was 0.12. In the same conditions, the discolouration degree delta E was 7.5.

Reference example 2

A polyester precursor was synthesized in the same procedure as in embodiment 2, and 3.49 g of tris(tridecyl)phosphite was added together with butane-1,4-diol, and the temperature was raised to 250°C while reducing the pressure gradually. At less than 1 Torr, a polycondensation reaction was conducted. In this case, it took 2 hours and 30 minutes after reaching 250°C to obtain a polymer of which I.V. is 0.75.

After treating the polymer pellets similarly as in embodiment 2, the drop delta I.V. of intrinsic viscosity was 0.06, and the discolouration degree delta E was 14.2.

Embodiment 3

Dimethyl terephthalate by 5820 g, butane-1,4-diol by 3375 g, and tetra-n-butyl titanate by 9.75 as catalyst were put in a reaction vessel, and an ester exchange

reaction was conducted at 195°C, and this temperature was held for 20 minutes under reduced pressure of 150 Torr to synthesize a polyester precursor. Then tetrakis(2,4-di-t-butylphenyl)4,4'-diphenylene phosphonite by 17.46 g was added together with butane-1,4-diol, and the temperature was raised to 245°C while gradually reducing the pressure. When decompressed to less than 1 Torr and heated up to 245°C, a polycondensation reaction was conducted for 2 hours. The I.V. of the obtained polymer was 0.91.

After 24-hour treatment of polymer pellets in the air in a thermostatic oven controlled at 185°C, the drop delta I.V. of intrinsic viscosity was 0.03, and the discolouration degree delta E in the same conditions was 7.3.

Reference example 3

A polyester precursor was synthesized in the same procedure as in embodiment 3, and 17.46 g of triphenyl phosphite was added together with butane-1,4-diol, and the temperature was raised to 245°C while reducing the pressure gradually. When decompressed to less than 1 Torr and heated up to 245°C, a polycondensation reaction was conducted for 2 hours. The I.V. of thus obtained polymer was 0.85.

After 24-hour treatment of polymer pellets in the air in a thermostatic oven controlled at 185°C, the drop delta I.V. of intrinsic viscosity was 0.04, and the discolouration degree delta E in the same conditions was 21.5.

Embodiment 4

Terephthalic acid by 4980 g, butane-1,4-diol by 4590 g, and tetra-n-butyl titanate by 3.98 g as catalyst were put in a reaction vessel, and an esterification reaction was conducted at 220°C, and this temperature was held for 20 minutes at reduced pressure of 150 Torr to synthesize a polyester precursor. Then tetrakis

(2,4-di-t-butylpheynyl)4,4'-diphenylene phosphonite by 3.98 g was added together with butane-1,4-diol, and the temperature was raised to 250°C while reducing the pressure gradually. When decompressed to less than 1 Torr and heated up to 250°C, a polycondensation reaction was conducted for 2 hours and 30 minutes. The IV of thus obtained polymer was 1.02.

After 24-hour treatment of polymer pellets in the air in a thermostatic oven controlled at 185°C, the drop delta I.V. of intrinsic viscosity was 0.02, and the discolouration degree delta E in the same conditions was 7.9.

CLAIMS

1. A method of preparation of polyester characterized by addition of one or more kinds of phosphonite compound shown in the general formula below at an arbitrary timing from the stage of addition of material monomer till forming after completion of polymerization reaction so that 0.002 to 1.0 wt. % may be contained in the obtained polyster, in production of polyester possessing a residual group of dicarboxylic acid and a residual group of dihydroxy compound as principal constituent units; the said formula being:-

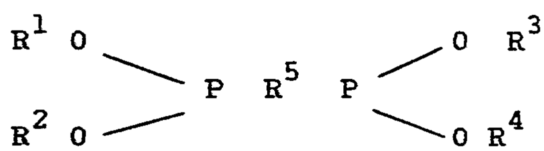

(I)

where each of $R^1$, $R^2$, $R^3$ and $R^4$ is an alkyl group, a substituted alkyl group, an aryl group or a substituted aryl group with the number of carbons ranging either equally or differently from 1 to 25, and $R^5$ denotes an alkyl group, a substituted alkyl group, an aryl group or a substituted aryl group with the number of carbons ranging from 4 to 33.

2. A method of preparation of polyester as set forth in claim 1, wherein as the principal constituent units of the polyester the residual group of dicarboxylic acid is a residual group of terephthalic acid, and the dihydroxy compound is a polytetramethylene terephthalate being composed of residual group of butane-1,4-diol.

3. A method of preparation of polyester as set forth in claim 1 or 2, wherein the phosphonite compound is added in an early stage of polycondensation reaction process.

4. A method of preparation of polyester as set forth in claim 1 or 2, wherein the phosphonite compound is added during blending of the monomer.

5. A method according to any one of claims 1 to 4, wherein the phosphonite compound is tetrakis(2,4-di-t-butylphenyl)4,4$^1$-diphenylene phosphonite.

6. A polyester when produced according to the method defined in anyone of claims 1 to 5.